# EUROPÄISCHE PATENTSCHRIFT

(11) **EP 1 984 698 B1**
(45) Veröffentlichungstag und Bekanntmachung des Hinweises auf die Patenterteilung: **18.04.2012**
(21) Anmeldenummer: 06806325.4
(22) Anmeldetag: 17.10.2006
(51) Int. Cl.: G01D 5/347

(54) **ABTASTSYSTEM EINER POSITIONSMESSEINRICHTUNG**
SENSING SYSTEM OF A POSITION MEASUREMENT DEVICE
SYSTÈME DE BALAYAGE D'UN DISPOSITIF DE MESURE DE POSITION

(30) Priorität: 03.02.2006 DE 102006004898
(43) Veröffentlichungstag der Anmeldung: 29.10.2008
(73) Patentinhaber: Dr. Johannes Heidenhain GmbH, 83301 Traunreut (DE)
(72) Erfinder: PUCHER, Wolfgang, 83278 Traunstein (DE); MAYER, Reinhard, 83278 Traunstein (DE); KÜHNHAUSER, Stefan, 83373 Taching am See (DE)
(86) Internationale Anmeldenummer: PCT/EP2006/009991
(87) Internationale Veröffentlichungsnummer: WO 2007/090441

(56) Entgegenhaltungen:
- DE-A1- 2 505 587
- DE-A1- 10 311 111
- US-A- 4 892 416
- US-A- 5 760 392
- KWAN Y-B P ET AL: "MASSARBEIT. NANOMETERGENAUE POSITIONSMESSUNG IN ALLEN FREIHEITSGRADEN" F & M FEINWERKTECHNIK MIKROTECHNIK MIKROELEKTRONIK, HANSER, MUNCHEN, DE, Bd. 108, Nr. 9, 2000, Seiten 60-64, XP001006324 ISSN: 1437-9503

## Beschreibung

Die Erfindung betrifft ein Abtastsystem einer Positionsmesseinrichtung gemäß dem Anspruch 1.

Ein Abtastsystem einer Positionsmesseinrichtung zur lichtelektrischen Abtastung einer Messteilung weist einen Träger mit Bauelementen auf. Die Bauelemente sind beispielsweise optische Bauelemente zum Führen eines Abtastlichtbündels, wobei das Führen ein. Umlenken, Kollimieren oder Aufspalten sein kann oder beispielsweise elektrische Bauelemente, wie Detektorelemente zur Wandlung des Abtastlichtbündels in elektrische Abtastsignale. Das Abtastlichtbündel wird bei der Relativbewegung einer Abtastteilung des Abtastsystems relativ zu der Messteilung positionsabhängig moduliert. Zur Positionsmessung ist das Abtastsystem an einem ersten der zu messenden Objekte und die Messteilung an einem relativ dazu beweglichen zweiten der zu messenden Objekte befestigt.

Ein derartiges Abtastsystem ist beispielsweise in dem Zeitschriftenartikel von Kwan Yim-Bun Patrick et al: "Maßarbeit; Nanometergenaue Positionsmessung in allen Freiheitsgraden", F&M Jahrg. 108 (2000), Nr 9, Seiten 60 bis 64 beschrieben. Die Abtastteilung besteht dabei aus zwei eindimensionalen Masken, hinter denen Fotodetektoren angeordnet sind. Eine davon beabstandete zusätzliche Abtastteilung erlaubt die Messung eines Verdrehwinkels gegenüber einem orthogonalen Gitternetz, das die Messteilung darstellt. Diese Messteilung ist dem Maskentisch zugeordnet und das Abtastsystem einem dazu in mehreren Freiheitsgraden beweglichen Objekt.

Zur hochgenauen Positionsmessung ist es erforderlich, dass das Abtastlichtbündel ausschließlich aufgrund einer Relativbewegung der zu messenden Objekte moduliert wird. Thermische Einflüsse auf das Abtastsystem sollen die Positionsmessung nicht beeinflussen.

Aufgabe der Erfindung ist es daher, ein Abtastsystem zu schaffen, das derart ausgestaltet ist, dass durch thermische Einflüsse die Positionsmessung nicht bzw. nur vernachlässigbar verfälscht wird.

Gelöst wird diese Aufgabe durch die Merkmale des Anspruchs 1.

Vorteilhafte Ausbildungen der Erfindung sind in den abhängigen Ansprüchen angegeben. Vorteile der Erfindung sind in der nachfolgenden Beschreibung erörtert.

Ein Ausführungsbeispiel der Erfindung wird anhand der Zeichnungen näher erläutert.

Es zeigen
- Figur 1: eine Positionsmesseinrichtung mit einem erfindungsgemäß ausgestalteten Abtastsystem;
- Figur 2: einen Adapter mit einer Abtastteilung des Abtastsystems gemäß Figur 1;
- Figur 3: einen Teilschnitt des Abtastsystems gemäß Figur 1 und
- Figur 4: ein stabförmiges Festkörpergelenk im Detail.

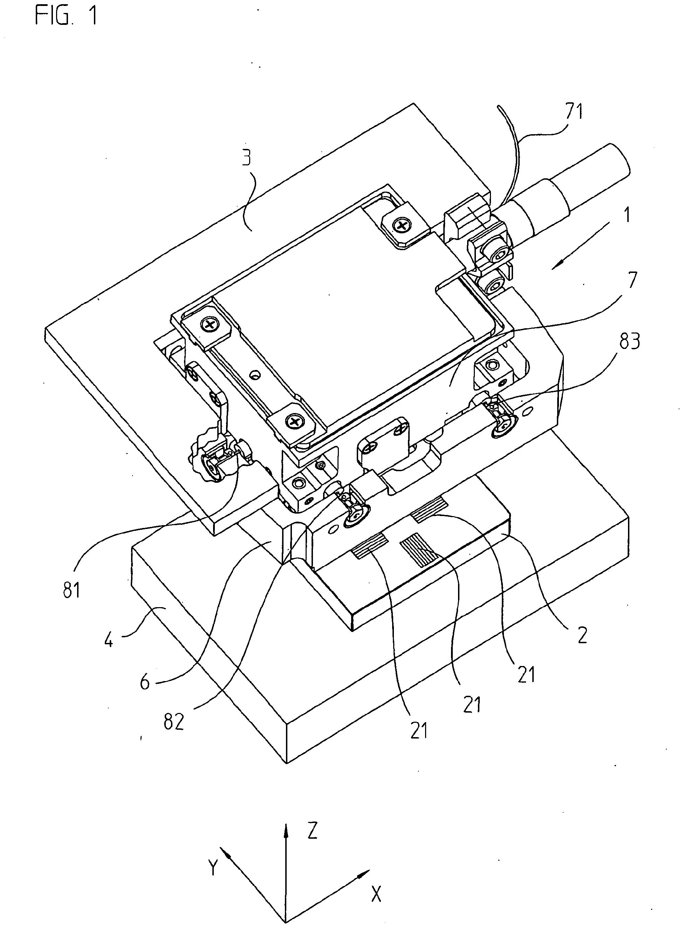

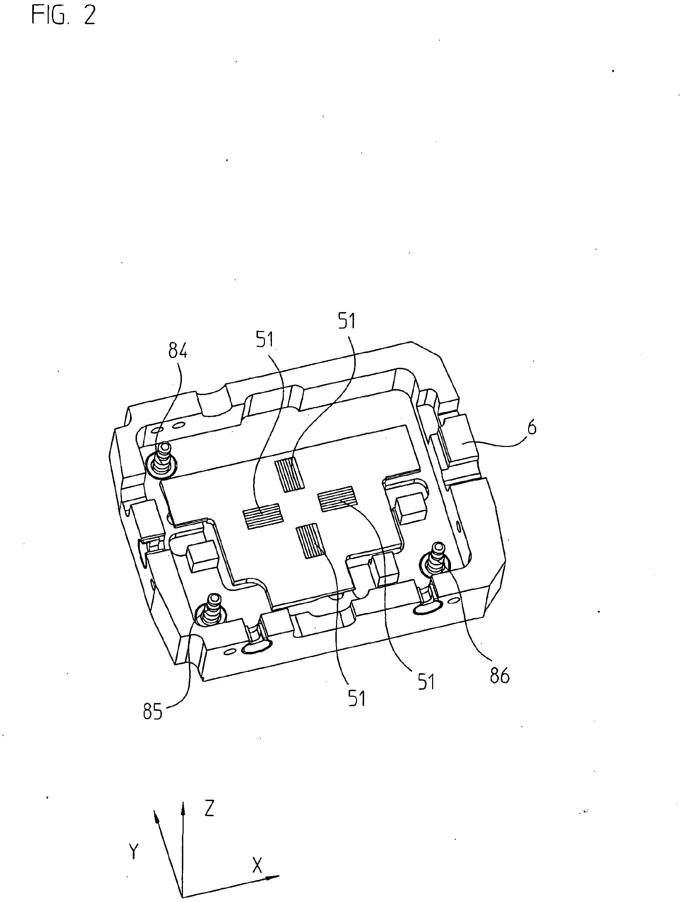

In den Figuren 1 bis 3 ist eine lineare zweidimensional messende Positionsmesseinrichtung mit einem Abtastsystem 1 zur lichtelektrischen Abtastung einer Messteilung 21 eines Maßstabs 2 dargestellt.

Die Positionsmesseinrichtung dient im dargestellten Beispiel zur zweidimensionalen inkrementalen Positionsmessung (X- und Y-Richtung) zweier relativ zueinander bewegbarer Objekte 3 und 4. Die Messteilung 21 weist hierzu in bekannter Weise Felder mit Teilstrichen in X-Richtung verlaufend sowie in Y-Richtung verlaufend auf.

Die lichtelektrische Abtastung beruht auf der Erfassung der Verschiebung der Messteilung 21 relativ zu einer Abtastteilung 51. Hierzu wird ein Abtastlichtbündel verwendet, welches von der Abtastteilung 51 sowie von der Messteilung 21 beeinflusst wird und positionsabhängig moduliert wird. Der Messkreis verläuft also ausgehend vom ersten Objekt 3 über die Abtastteilung 51 zur Messteilung 21 zum zweiten Objekt 4. In diesem Teil des Messkreises dürfen thermische Einflüsse keine Relativverschiebungen der Abtastteilung 51 relativ zur Messteilung 21 verursachen.

Gemäß der Erfindung ist hierzu die Abtastteilung 51 einem Adapter 6 ortsfest zugeordnet. Im dargestellten Beispiel ist die Abtastteilung 51 auf eine Abtastplatte 5 aufgebracht und diese Abtastplatte 5 ist ortsfest am Adapter 6 befestigt. Diese Befestigung kann eine kraftschlüssige und/oder formschlüssige Befestigung sein, beispielsweise Klemmen oder Ansprengen. Alternativ kann die Abtastteilung 51 auch direkt auf dem Adapter 6 aufgebracht sein, wobei dann die Abtastplatte 5 vom Adapter 6 gebildet wird.

Der Adapter 6 des Abtastsystems 1 steht dem Anwender zum ortsfesten Anbau, z.B. Anschrauben, Anklemmen oder Ansprengen des Abtastsystems 1 an das zu messende Objekt 3 zur Verfügung.

Das Abtastsystem 1 enthält außer der Abtastteilung 51 noch weitere Komponenten, insbesondere optische und/oder elektrische Bauelemente zur Führung und/oder Wandlung des Abtastlichtbündels. Diese optischen und elektrischen Bauelemente sind an einem Träger 7 befestigt. Bei dem Ausführungsbeispiel sind einige dieser optischen und elektrischen Bauelemente schematisch dargestellt, ein Lichtwellenleiter 71 zur Führung von Licht an das Abtastsystem 1, Linsen 72 bzw. Spiegel zur Weiterführung und Formung des Abtastlichtbündels sowie Detektorelemente 73 zur Wandlung des Abtastlichtbündels in positionsabhängige elektrische Abtastsignale. Am Träger 7 können auch weitere zur Abtastung bzw. zum Halten dieser Bauelemente benötigten Teile, wie optische Teiler, Aufspaltgitter, Polarisatoren oder Leiterplatten befestigt sein.

Der Träger 7 mit den optischen und elektrischen Bauelementen 71, 72, 73 wird mittels einer Halterung 8 am Adapter 6 gehalten. Diese Halterung 8 ist derart ausgebildet, dass der Träger 7 in sechs Freiheitsgraden stationär am Adapter 6 positioniert ist, aber thermisch bedingte Ausdehnungen des Trägers 7 relativ zum Adapter 6 ausgleicht. Dadurch ist gewährleistet, dass durch Temperaturänderungen verursachte Ausdehnungen bzw. Verspannungen des Trägers 7 nicht auf den Adapter 6 und somit auf die Abtastteilung 51 übertragen werden.

Bauelemente, welche die Lage der Abtastteilung 51 bei Temperaturänderungen nicht negativ beeinflussen, können in nicht gezeigter Weise auch direkt am Adapter 6 befestigt sein. So können z.B. optische Bauelemente, die aus dem gleichen Material wie der Adapter 6 sind, am Adapter 6 angesprengt sein.

Ausdehnungen und somit Längenänderungen des Trägers 7 relativ zum Adapter 6 können ihre Ursache darin haben, dass verschiedene Materialien Verwendung finden bzw. dass unterschiedliche Temperaturen einwirken. So kann der Adapter 6 mit der Abtastteilung 51 aus Glaskeramik mit einem vernachlässigbaren Ausdehnungskoeffizienten bestehen und der Träger 7 aus Metall. Metall kann deshalb erforderlich sein, weil der Träger 7 als Gehäuse die optoelektrischen Bauelemente wie Detektorelemente 73 vor elektromagnetischen Strahlungen abschirmt bzw. die Linsen 72 sowie Klebestellen vor schädlichen optischen Strahlungen, beispielsweise UV-Strahlung abschirmt. Vorteilhaft ist, wenn die Festkörpergelenke 81 bis 86 stabförmig ausgebildet sind und in Stabrichtung steif sind, aber in Richtungen senkrecht dazu auslenkbar sind. Ebenfalls vorteilhaft ist, wenn sich jeweils zumindest ein Festkörpergelenk 81; 82, 83; 84, 85, 86 in einer der drei Koordinatenrichtungen X, Y, Z erstreckt und in dieser Koordinatenrichtung X, Y, Z den Träger 7 starr am Adapter 6 fixiert, aber in den beiden anderen Koordinatenrichtungen X, Y, Z auslenkbar hält.

Der Träger 7 besteht beispielsweise aus Invar und der Adapter 6 aus Zerodur.

Die Halterung 8 ist derart ausgebildet, dass der Träger 7 am Adapter 6 in sechs Freiheitsgraden stationär positioniert ist, also statisch bestimmt gehalten bzw. gelagert ist. Die Halterung 8 hat weiterhin die Eigenschaft, dass thermisch bedingte unterschiedliche Ausdehnungen von Träger 7 und Adapter 6 ausgeglichen bzw. kompensiert werden. Zum Erreichen einer hohen Messgenauigkeit muss die Halterung 8 einen Ausgleich in zumindest den zwei Koordinatenrichtungen X, Y ermöglichen, welche die Teilungsebene aufspannen.

Ein Optimum wird erreicht, wenn ein Ausgleich in allen drei Koordinatenrichtungen X, Y, Z ermöglicht ist. Ein derartiges Ausführungsbeispiel ist in den Figuren 1 bis 3 dargestellt und wird nun weiter erläutert.

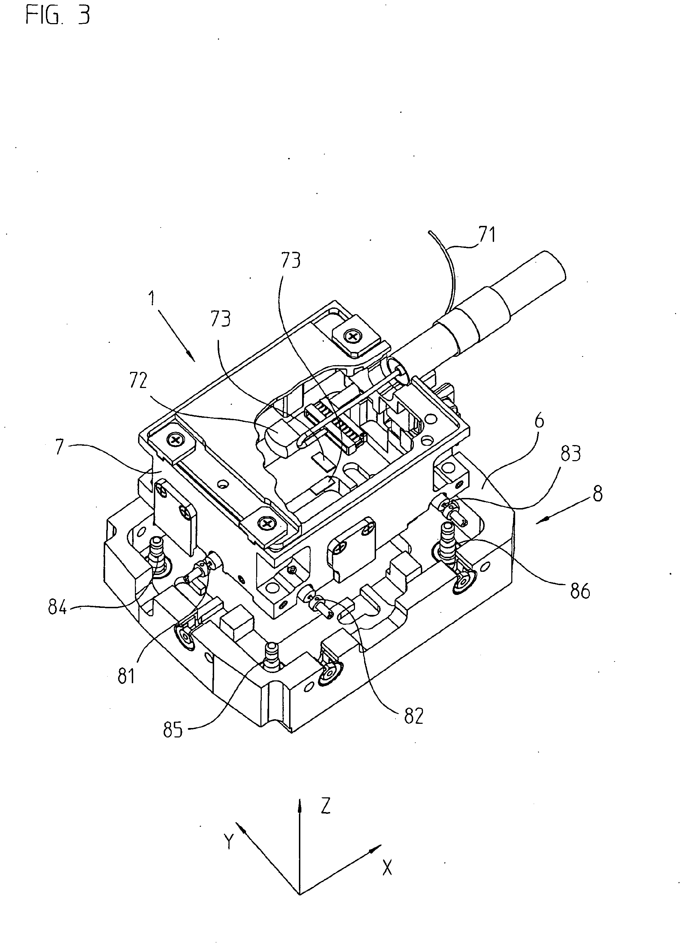

Die Halterung 8 weist eine räumliche Anordnung von Festkörpergelenken 81 bis 86 auf. Diese Festkörpergelenke 81 bis 86 - auch Biegegelenke bzw. flexures genannt - weisen jeweils zumindest eine stabförmige Schwachstelle als Biegeabschnitt auf. Jedes der Festkörpergelenke 81 bis 86 ist mit einem Abschnitt am Träger 7 befestigt und mit einem Abschnitt am Adapter 6, dazwischen befindet sich der Biegeabschnitt. Die stabförmigen Festkörpergelenke 81 bis 86 weisen in Stabrichtung jeweils eine sehr hohe Steifigkeit auf und in Richtungen normal zur Stabrichtung eine geringfügige Steifigkeit auf. Zur besseren Sichtbarkeit der Festkörpergelenke 81 bis 86 ist in Figur 3 die Abtastplatte 5 nicht dargestellt und der Träger 7 relativ zum Adapter 6 in Z-Richtung versetzt dargestellt. Um die freie Auslenkbarkeit normal zur Stabrichtung ohne Vorzugsrichtung zu gewährleisten, hat der Biegeabschnitt, der als Scharnier wirkt vorzugsweise einen runden Querschnitt.

Die räumliche Anordnung der Festkörpergelenke 81 bis 86 ist derart gewählt, dass der Träger 7 in allen drei Koordinatenrichtungen X, Y, Z unverschieblich am Adapter 6 gelagert ist. Hierzu erstreckt sich zumindest ein Festkörpergelenk 81, 82, 85 jeweils in Stabrichtung in einer der Koordinatenrichtungen X, Y, Z. Die Verdrehungen um die Koordinatenachsen X, Y, Z werden durch die weiteren Festkörpergelenke 83, 84, 86 gesperrt.

Im Detail erstreckt sich das Festkörpergelenk 81 in X-Richtung und fixiert und sperrt somit den Träger 7 am Adapter 6 in X-Richtung. Zur Fesselung in Y-Richtung erstreckt sich das Festkörpergelenk 82 in Y-Richtung und zur Fesselung in Z-Richtung erstreckt sich das Festkörpergelenk 85 in Z-Richtung.

Die Verdrehung um die Z-Achse wird durch die Anordnung des weiteren Festkörpergelenkes 83 parallel zum Festkörpergelenk 82 verhindert, wobei die Festkörpergelenke 81, 82 und 83 in einer Ebene parallel zur Teilungsebene angeordnet sind. Die Verdrehung um die X- und Y-Achse wird durch die räumlich versetzte Anordnung von drei parallel zur Z-Richtung verlaufenden Festkörpergelenken 84, 85, 86 verhindert.

Die Festkörpergelenke 82, 83, 84, 85, 86 ermöglichen eine Längenausdehnung des Trägers 7 in X-Richtung, ausgehend von der Fixierung des Trägers 7 durch das Festkörpergelenk 81. Die Festkörpergelenke 81, 84, 85, 86 ermöglichen eine Längenausdehnung des Trägers 7 in Y-Richtung, ausgehend von der Fixierung des Trägers 7 durch die Festkörpergelenke 82, 83. Die Festkörpergelenke 81, 82, 83 ermöglichen eine Längenausdehnung des Trägers 7 in Z-Richtung, ausgehend von der Fixierung des Trägers 7 durch die Festkörpergelenke 84, 85, 86. Die Festkörpergelenke 81 bis 86 sind also derart räumlich angeordnet und ausgebildet, dass sie einerseits den Träger 7 ortsfest möglichst schwingungsstabil am Adapter 6 in allen sechs Freiheitsgraden fixieren und andererseits Längenausdehnungen ermöglichen, ohne unzulässige Kräfte auf den Adapter 6 und somit die Abtastteilung 51 zu übertragen.

Die dargestellte Anordnung der Festkörpergelenke 81 bis 86 ist nur eine von mehreren Möglichkeiten. Sie hat den Vorteil, dass aufgrund der plattenförmigen Struktur des Trägers 7, welche in der XY-Ebene liegt, die Eigenfrequenzen besonders hoch sind.

Eine alternative Anordnung ist beispielsweise das Vorsehen von jeweils zwei parallel zueinander verlaufenden Festkörpergelenken in jeder der aufeinander senkrecht stehenden Achsen X, Y, Z, wobei die zwei parallel zueinander verlaufenden stabförmigen Festkörpergelenke jeweils eine Ebene aufspannen, die senkrecht zu den Ebenen liegen, die von den beiden anderen Paaren von Festkörpergelenken der beiden anderen Achsen gebildet werden.

Die Haltefunktion in Z-Richtung kann auch von Festkörpergelenken übernommen werden, welche die thermisch bedingten Ausdehnungen des Trägers 7 relativ zum Adapter 6 in den zwei Koordinatenrichtungen X, Y ausgleichen. Hierzu sind diese Festkörpergelenke beispielsweise als Blattfedern oder Blattfederparallelogramme ausgebildet. Diese Blattfedern erstrecken sich in der zu sperrenden Z-Richtung. Eine oder mehrere der Blattfedern liegen also in der XZ-Ebene und sperren Bewegungen des Trägers 7 in den Richtungen X und Z, lassen aber Ausdehnungen des Trägers 7 in Y-Richtung zu. Eine oder mehrere weitere Blattfedern liegen in der YZ-Ebene und sperren Bewegungen des Trägers 7 in den Richtungen Y und Z, lassen aber Ausdehnungen des Trägers 7 in X-Richtung zu.

Bei allen Ausführungen sollte die Eigenfrequenz des Abtastsystems vorzugsweise über etwa 700 Hz liegen.

Vorteilhaft einsetzbar ist das Abtastsystem zur hochgenauen Positionsmessung in Lithografie-Geräten. Dabei ist das erste und zweite Objekt 3, 4 vorzugsweise aus einem Material mit vernachlässigbarem Ausdehnungskoeffizienten, insbesondere Glaskeramik in Form von ZERODUR, also aus dem gleichen Material wie der Adapter 6 und der Maßstab 2.

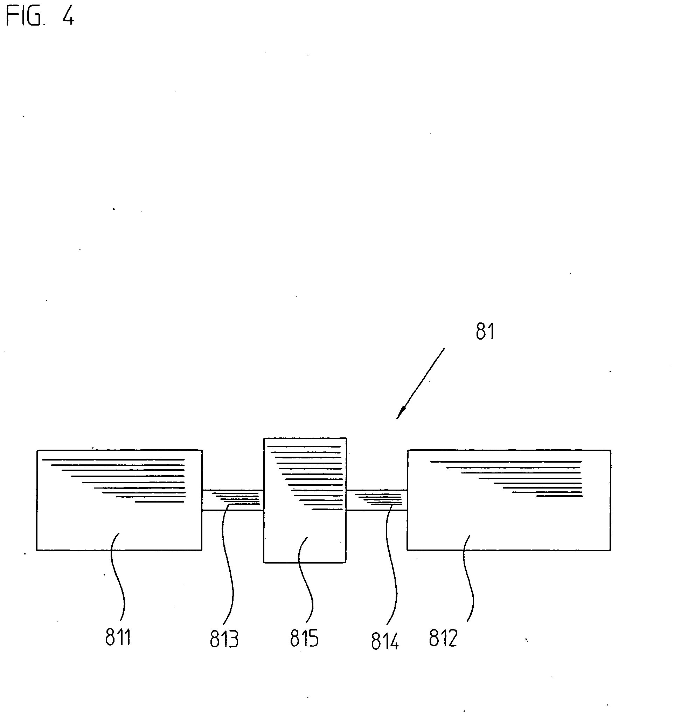

In Figur 4 ist eine besonders vorteilhafte Ausgestaltung eines der Festkörpergelenke 81 der Festkörpergelenke 81 bis 86 im Detail dargestellt. Das Festkörpergelenk 81 weist einen ersten Befestigungsabschnitt 811 zum Anbringen an den Adapter 6 auf und einen zweiten Befestigungsabschnitt 812 zum Anbringen an den Träger 7 auf. Dazwischen befindet sich zumindest ein stabförmiger Biegeabschnitt 813. Zur Erhöhung der Steifigkeit in Stabrichtung befinden sich im Beispiel zwischen den beiden Befestigungsabschnitten 811 und 812 zwei in Stabrichtung voneinander beabstandete und durch einen nicht biegbaren Abschnitt in Form einer Verdickung oder Verstärkung 815 voneinander getrennte stabförmige Biegeabschnitte 813 und 814. Diese Biegeabschnitte 813 und 814 haben vorzugsweise einen runden Querschnitt.

## Patentansprüche

1. Abtastsystem einer Positionsmesseinrichtung zur lichtelektrischen Abtastung einer Messteilung (21), mit
- einem Träger (7), welcher optische und/oder elektrische Bauelemente (71, 72, 73) trägt;
- einem Adapter (6) mit einer Abtastteilung (51) in einer Teilungsebene, und
- einer Halterung (8) zum Halten des Trägers (7) am Adapter (6), wobei diese Halterung (8) derart ausgebildet ist, dass der Träger (7) am Adapter (6) in sechs Freiheitsgraden stationär positioniert ist, aber thermisch bedingte Ausdehnungen des Trägers (7) relativ zum Adapter (6) in zumindest den zwei Koordinatenrichtungen (X, Y) ausgleicht, welche die Teilungsebene aufspannen.

2. Abtastsystem nach Anspruch 1, **dadurch gekennzeichnet, dass** die Halterung (8) zusätzlich thermisch bedingte Ausdehnungen des Trägers (7) relativ zum Adapter (6) in einer Koordinatenrichtung (Z) senkrecht zur Teilungsebene ausgleicht.

3. Abtastsystem nach Anspruch 1 oder 2, **dadurch gekennzeichnet, dass** die Halterung (8) eine räumliche Anordnung von Festkörpergelenken (81 bis 86) aufweist.

4. Abtastsystem nach Anspruch 3, **dadurch gekennzeichnet, dass** die Festkörpergelenke (81 bis 86) stabförmig ausgebildet sind und in Stabrichtung steif sind, aber in Richtungen senkrecht dazu auslenkbar sind.

5. Abtastsystem nach Anspruch 4, **dadurch gekennzeichnet, dass** die Festkörpergelenke (81 bis 86) jeweils zwei in Stabrichtung verlaufende Biegeabschnitte (813, 814) aufweisen, die durch einen nicht biegbaren Abschnitt (815) voneinander getrennt sind.

6. Abtastsystem nach Anspruch 5, **dadurch gekennzeichnet, dass** die Biegeabschnitte (813, 814) jeweils einen runden Querschnitt aufweisen.

7. Abtastsystem nach Anspruch 5 oder 6, **dadurch gekennzeichnet, dass** sich jeweils zumindest ein Festkörpergelenk (81; 82, 83; 84, 85, 86) in einer der drei Koordinatenrichtungen (X, Y, Z) erstreckt und in dieser Koordinatenrichtung (X, Y, Z) den Träger (7) starr am Adapter (6) fixiert, aber in den beiden anderen Koordinatenrichtungen (X, Y, Z) auslenkbar hält.

8. Abtastsystem nach einem der vorhergehenden Ansprüche, **dadurch gekennzeichnet, dass** der Adapter (6) aus einem Material mit vernachlässigbarem Ausdehnungskoeffizienten, insbesondere Glaskeramik besteht.

9. Abtastsystem nach einem der vorhergehenden Ansprüche, **dadurch gekennzeichnet, dass** die elektrischen Bauelemente des Trägers (7) Detektorelemente (73) sind.

10. Abtastsystem nach einem der vorhergehenden Ansprüche, **dadurch gekennzeichnet, dass** der Träger (7) in einer Ausnehmung des Adapters (6) angeordnet ist.

11. Abtastsystem nach einem der vorhergehenden Ansprüche, **dadurch gekennzeichnet, dass** der Träger (7) eine umschlossene Aufnahme bildet, in dessen Innenraum die optischen und/oder elektrischen Bauelemente (71, 72, 73) angeordnet sind.

## Claims

1. Scanning system of a position measuring device for photoelectric scanning of a measuring graduation (21), comprising
- a carrier (7), which carries optical and/or electrical components (71, 72, 73);
- an adapter (6) having a scanning graduation (51) in a graduation plane, and
- a holder (8) for holding the carrier (7) on the adapter (6), wherein this holder (8) is configured such that the carrier (7) on the adapter (6) is positioned such that it is stationary in six degrees of freedom, but compensates for thermal expansions of the carrier (7) relative to the adapter (6) in at least the two coordinate directions (X, Y) which define the graduation plane.

2. Scanning system according to Claim 1, **characterized in that** the holder (8) additionally compensates for thermal expansions of the carrier (7) relative to the adapter (6) in a coordinate direction (Z) perpendicular to the graduation plane.

3. Scanning system according to Claim 1 or 2, **characterized in that** the holder (8) has a spatial arrangement of solid-state joints (81 to 86).

4. Scanning system according to Claim 3, **characterized in that** the solid-state joints (81 to 86) are configured in the shape of bars and are stiff in the bar direction, but are deflectable in directions that are perpendicular thereto.

5. Scanning system according to Claim 4, **characterized in that** the solid-state joints (81 to 86) have in each case two bending sections (813, 814) which extend in the bar direction and are separated from one another by a non-bendable section (815).

6. Scanning system according to Claim 5, **characterized in that** the bending sections (813, 814) in each case have a round cross section.

7. Scanning system according to Claim 5 or 6, **characterized in that** in each case at least one solid-state joint (81; 82, 83; 84; 85; 86) extends in one of the three coordinate directions (X, Y, Z) and fixes the carrier (7) rigidly on the adapter (6) **in that** coordinate direction (X, Y, Z), but keeps it deflectable in the two other coordinate directions (X, Y, Z).

8. Scanning system according to one of the preceding claims, **characterized in that** the adapter (6) is made of a material with negligible coefficient of expansion, in particular glass ceramic.

9. Scanning system according to one of the preceding claims, **characterized in that** the electrical components of the carrier (7) are detector elements (73).

10. Scanning system according to one of the preceding claims, **characterized in that** the carrier (7) is arranged in a cutout of the adapter (6).

11. Scanning system according to one of the preceding claims, **characterized in that** the carrier (7) forms an enclosed receiving means, in the interior of which the optical and/or electrical components (71, 72, 73) are arranged.

## Revendications

1. Système de balayage d'un dispositif de mesure de position destiné à effectuer un balayage photoélectrique d'une graduation de mesure (21),
- comprenant un support (7) qui porte des composants optiques et/ou électriques (71, 72, 73) ;
- un adaptateur (6) comprenant une graduation de balayage (51) dans un plan de graduation, et
- un élément de maintien (8) destiné à maintenir le support (7) sur l'adaptateur (6), dans lequel le dispositif de maintien (8) est conçu afin que le support (7) soit positionné de manière stationnaire sur l'adaptateur (6) suivant six degrés de liberté, mais que les dilatations induites thermiquement du support (7) par rapport à l'adaptateur (6) soient compensées suivant au moins les deux directions de coordonnées (X, Y) qui couvrent le plan de graduation.

2. Système de balayage selon la revendication 1, **caractérisé en ce que** le dispositif de maintien (8) compense en outre des dilatations induites thermiquement du support (7) par rapport à l'adaptateur (6) dans une direction de coordonnées (Z) perpendiculaire au plan de graduation.

3. Système de balayage selon la revendication 1 ou 2, **caractérisé en ce que** le dispositif de maintien (8) comprend un agencement spatial de joints à l'état solide (81 à 86).

4. Système de balayage selon la revendication 3, **caractérisé en ce que** les oints à l'état solide (81 à 86) sont réalisés sous la forme de tiges et sont rigides dans la direction de la tige mais peuvent être orientés dans des directions perpendiculaires à celle-ci.

5. Système de balayage selon la revendication 4, **caractérisé en ce que** les joints à l'état solide (81 à 86) comprennent chacun deux sections flexibles (813, 814) s'étendant dans la direction de la tige qui sont séparées l'une de l'autre par une section (815) non flexible.

6. Système de balayage selon la revendication 5, **caractérisé en ce que** les sections flexibles (813, 814) présentent chacune une section transversale ronde.

7. Système de balayage selon la revendication 5 ou 6, **caractérisé en ce qu'**au moins un joint à l'état solide respectif (81 ; 82, 83 ; 84, 85, 86) s'étend dans l'une des trois directions de coordonnées (X, Y, Z) et **en ce que**, dans cette direction de coordonnées (X, Y, Z), le support (7) reste fixé rigidement à l'adaptateur (6) mais de manière à pouvoir être orienté dans les deux autres directions de coordonnées (X, Y, Z).

8. Système de balayage selon l'une des revendications précédentes, **caractérisé en ce que** l'adaptateur (6) est constitué d'un matériau présentant un coefficient de dilatation négligeable, notamment une vitrocéramique.

9. Système de balayage selon l'une des revendications précédentes, **caractérisé en ce que** les composants électriques du support (7) sont des éléments détecteurs (73).

10. Système de balayage selon l'une des revendications précédentes, **caractérisé en ce que** le support (7) est disposé dans un évidement de l'adaptateur (6).

11. Système de balayage selon l'une quelconque des revendications précédentes, **caractérisé en ce que** le support (7) forme un réceptacle scellé dans l'espace intérieur duquel sont disposés les composants optiques et/ou électriques (71, 72, 73).
